# EUROPEAN PATENT APPLICATION

(11) **EP 3 473 693 A1**
(43) Date of publication of application: **24.04.2019**
(21) Application number: 17197281.3
(22) Date of filing: 19.10.2017
(51) Int. Cl.: C10B 47/30, C10B 53/07, C10B 5/00, C10B 19/00, C10B 21/10, C10B 23/00

(54) **THERMAL DEGRADATION REACTOR AND METHOD FOR OPERATING THE REACTOR**

(71) Applicant: ThermoDeg s.r.o., 929 01 Dunajská Streda (SK)
(72) Inventor: GRABAR, Jurij, 03129 Vilnius (LT); ZHDANOK, Vitali, 220090 Minsk (BY); GRÓB, János, 1132 Budapest (HU); NÉMET, Tamás, 1143 Budapest (HU)
(74) Representative: Harangozo, Gabor

(57) **Abstract**

The externally heated thermal degradation reactor comprises a reaction chamber (1) in the form of a cylindrical rotating drum having a substantially horizontal rotational axis; an end plate (3, 4) on a supply side and a discharge side of the reaction chamber (1), respectively, said end plates being sealingly coupled to the rotating reaction chamber (1), wherein the supply-side end plate (3) comprises at least one opening (20) for feeding a base material and a gaseous reducing agent, and wherein the discharge-side end plate (4) comprises a first discharge opening (23) for discharging gaseous reaction products and a second discharge opening (24) for discharging solid reaction products; a feeding pipe (6) extending through the supply-side end plate (3) into the reaction chamber (1); a pipe (5) extending through the supply-side end plate (3) into the reaction chamber (1) for feeding a reducing agent; and a housing (18) arranged around the reaction chamber (1), said housing being sealingly attached to the reactor chamber and provided with a vent hole (14) on its upper part. The reactor further comprises a plurality of infra radiation heating units (16) arranged around at least a part of the cylindrical surface of the reaction chamber (1) and heating said surface substantially in a uniform manner, said heating units being integrated into the wall of the housing (18) on two sides thereof. The method of the invention is used to operate the above reactor.

## Description

The present invention relates to a thermal degradation reactor and a method for operating a reactor of this type.

A number of variants of the so called thermal degradation reactors are known. These devices have been used for a long time to eliminate moisture or other volatile materials from a contaminated raw material or to thermally degrade hydrocarbon-containing materials, for example to crack mineral oils. These kinds of reactors conventionally comprise a reaction chamber arranged within a housing or mounted on a support frame, wherein the reaction chamber is externally heated, generally by means of gas burners.

A specific type of the thermal degradation reactors is a reactor with a rotating drum having a horizontal axis. This type of reactor is commonly used in the chemical industry and in the mineral processing industries. During the process based on a thermolysis reaction, the cylindrical rotating drum is rotated at a given rotational speed, typically at a speed of a few rotations per minute, while the whole of the drum is being heated from outside. Inside the drum the material to be processed moves continuously from a supply end of the drum towards a discharge end thereof where the gaseous and solid products of the reaction are withdrawn or discharged from the drum.

A reactor of the above type is disclosed for example in the published document WO 2008/043982 A2. In this reactor the materials to be processed, in particular solid, carbon-containing materials, are fed from a supply hopper through a chute to the inner space of the drum. The rotating drum is surrounded by a housing which is sealingly attached to the rotating drum, wherein there are a number of gas burners arranged at the bottom of the housing. The flames of the gas burners directly heat the wall of the rotating drum. The combustion gas of the gas burners is discharged through an opening formed on an upper part of the housing. Within the inner space of the housing partitions are arranged to define a plurality of compartments that are separated from each other in a substantially gas-tight manner, therefore the combustion gas of a group of gas burners can flow upwards only in the compartment belonging to that particular group of gas burners. The solid reaction products are discharged from the rotating drum through an outlet and collected in an appropriate container. The rotating drum is slightly tilted downwards toward its discharge end with respect to the horizontal line. As a reducing agent for the reaction overheated steam is fed into the rotating drum. The gaseous materials resulted from the reaction are discharged at the supply end of the rotating drum, and in this way the reducing agent flows in a countercurrent with respect to the flowing direction of the raw material within the reactor drum. The drum is rotated by means of a motor and a drive chain.

One of the drawbacks of the above mentioned reactor is that the flame of the gas burners directly acts on the wall of the rotating drum, thereby the wall of the drum is subject to a substantial extent of point-like heat load, which results in a quick wearing of the material of the drum's wall, and therefore fractures might develop therein, for example. Another drawback of the afore-mentioned reactor is that due to its heating from outside, the heat distribution is not uniform over the cylindrical surface of the drum, because in course of rotation of the drum, the lower surface area of the drum always has a substantially higher temperature than the surface area currently being upside, which is unfavorable to the reaction taking place inside the chamber. A further disadvantage of this reactor is that the combustion gas of the gas burners carries a substantial amount of heat which is not recovered, and therefore the overall energetic efficiency of the reactor cannot meet the requirements.

A primary object of the present invention is to improve the known thermal degradation reactors by at least one of increasing the overall energetic efficiency of the reactor, heating the reaction chamber in a more efficient way and providing better physical conditions for the reaction inside the reaction chamber than ever before.

The present invention is based on the inventive idea that the heat-load acting on the reaction chamber of the reactor can be made much more uniform if the cylindrical surface of the rotating drum is heated uniformly by infra heat radiation over the largest possible surface area thereof. It has been also recognized that the efficiency of the reactor can be significantly increased in a way that when the reactor is heated by means of gas-fired infra radiation heating units, then a substantial amount of heat can be recovered from the combustion gas produced by the heating, and at least a part thereof can be used for heating or overheating a reducing agent to be fed into the reaction chamber. It has been also recognized that when a plurality of gas-fired infra radiation heating units are used for heating the reaction chamber at different height levels, the heating efficiency of the reaction chamber can be further improved by providing gas baffling strips on the inner side of the housing, wherein said strips are arranged in a configuration to divert the combustion gas of the lower heating units away from the infra radiating surfaces of the higher heating units.

The above objects are first achieved by providing an externally heated thermal degradation reactor that comprises a reaction chamber in the form of a cylindrical rotating drum having a substantially horizontal rotational axis; an end plate on both of the supply side and the discharge side of the reaction chamber, said end plates being sealingly coupled to the rotating reaction chamber, wherein the supply-side end plate comprises at least one opening for feeding the base material and the gaseous reducing agent, and wherein the discharge-side end plate comprises a first discharge opening for discharging the gaseous reaction products and a second discharge opening for discharging the solid reaction products; a feeding pipe led through the supply-side end plate into the reaction chamber; a pipe led through the supply-side end plate into the reaction chamber for feeding a reducing agent; and a housing arranged around the reaction chamber, said housing being sealingly attached to the reactor chamber and provided with a vent hole on its upper part. The reactor further comprises a plurality of infra radiating heating units arranged around at least a part of the cylindrical surface of the reaction chamber and heating said surface substantially in a uniform manner, said heating units being integrated into the wall of the housing on two sides thereof.

On both sides of the housing a single heating unit may be integrated into the wall of the housing, each heating unit comprising a plurality of sections along the rotational axis of the reaction chamber, wherein the heating power of each heating section can be individually controlled.

On both sides of the housing a plurality of heating units may be integrated into the wall of the housing along the rotational axis of the reaction chamber, wherein the heating power of each heating unit can be controlled individually or in groups.

The heating units may be gas-fired or electrically powered. The gas-fired heating units preferably comprise a porous ceramic plate as an infra radiating body and they burn the fuel material in a substantially flame-free way on the surface of the ceramic plate facing towards the reaction chamber.

When a plurality of gas-fired infra radiating heating units are mounted in the wall of the housing according to a predetermined pattern at at least two height levels with individually or group-wise controllable heating power, it is preferred that on the inner surface of the housing, between the heating units, one or more gas baffling strips are arranged so that the combustion gas of the lower heating units be diverted away from the infra radiating surfaces of the higher heating units.

The height of the strips are preferably dimensioned so that under normal operational conditions there is a clearance of at least 10 mm, preferably at least 15 mm between the wall of the reaction chamber and the opposite edge of the strips.

Preferably, the pipe carrying the reducing agent is led through a heat exchange section of the housing formed within a part of the housing above the reaction chamber. The pipe of the reducing agent may be formed as a serpentine pipe in the heat exchange section of the housing. The reducing agent may, for example, be overheated steam or carbon dioxide.

It is preferred that the inner wall of the reaction chamber comprises a spiral rib projecting therefrom and that the rotational axis of the reaction chamber is tilted towards the discharge and of the reaction chamber with respect to the horizontal line at most by 5°.

The wall of the feeding pipe may be provided with cooling, for example water cooling.

The feeding pipe may be in the form of a motor-driven, screw-type feeding pipe.

In a preferred embodiment of the reactor, a gas tank is connected to the feeding pipe for supplying a pressurized inert gas into the feeding pipe.

The feeding pipe and the rotational axis of the reaction chamber preferably defines an angle of approximately 30° to 60° in a horizontal projection plane, and the inner end of the feeding pipe within the reaction chamber is preferably arranged adjacent to the inner wall of the reaction chamber.

A suction device is connected to the first discharge opening of the reaction chamber, either directly or through processing units, for removing the gaseous reaction products.

In a preferred embodiment of the reactor the housing is formed of a lower part and an upper part that are secured to each other by means of a releasable joint in a way that upon their detachment the reaction chamber can be removed from the housing.

Preferably, a container with a heat-insulated wall is coupled to the second discharge opening of the reaction chamber for collecting the solid reaction products.

On the supply-side end plate, a single supply opening may be formed for both of the feeding pipe and the pipe of the reducing agent, or alternatively, a first supply opening may be formed on the supply-side end plate for the feeding pipe and a second opening may be formed for the pipe of the reducing agent.

The inner end of the pipe of the reducing agent within the reaction chamber is preferably arranged adjacent to the inner end of the feeding pipe.

The above objects are further achieved by providing a method for processing a base material with thermal degradation by means of the reactor according to the invention. The method comprises the steps of continuously feeding the base material and the reducing agent into the reaction chamber, and at least the feeding rate of the base material, the rotational speed of the reaction chamber and the heating power of the heating units are controlled so that the base material stays about 30 to 60 minutes in the reaction chamber at a continuous operation, and the operational temperature inside the reaction chamber is about 400°C to 600°C, preferably about 450°C to 500°C.

The invention will now be described in more detail with reference to the drawings, in which:
- Figure 1 is a schematic side view of a first exemplary embodiment of the reactor according to the invention;
- Figure 2 is a schematic longitudinal sectional and inside view of a second exemplary embodiment of the reactor according to the invention;
- Figure 3 is a schematic longitudinal sectional and inside view of a third exemplary embodiment of the reactor according to the invention;
- Figure 4 is a schematic longitudinal sectional and inside view of a forth exemplary embodiment of the reactor according to the invention;
- Figure 5 is a schematic top plan view of a first exemplary embodiment of the reactor according to the invention;
- Figure 6 is a schematic longitudinal sectional and inside view of a fifth exemplary embodiment of the reactor according to the invention;
- Figure 7 is a schematic side view of a sixth exemplary embodiment of the reactor according to the invention;
- Figure 8 is a schematic sectional and inside view of a sixth exemplary embodiment of the reactor according to the invention;
- Figure 9 is a schematic side view of a seventh exemplary embodiment of the reactor according to the invention;
- Figure 10 is a schematic side view and a top plan view of gas-fired heating unit used in the reactor according to the invention;
- Figure 11 illustrates, in a schematic inside view, an exemplary arrangement of the gas baffling strips used in the embodiment of the reactor shown in Figure 7;
- Figure 12 illustrates, in schematic inside view, an exemplary arrangement of the gas baffling strips used in the embodiment of the reactor shown in Figure 9; and
- Figure 13 is a functional block diagram of an exemplary system including the reactor according to the invention.

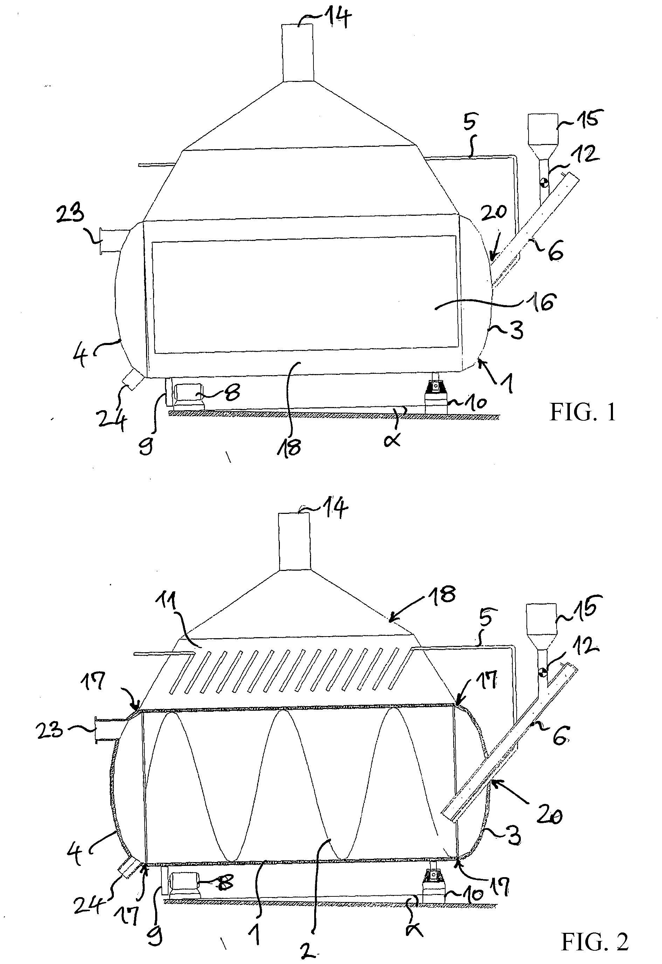

Figure 1 is a schematic side view of the externally heated, thermal degradation reactor according to the invention, and Figure 2 illustrates a preferred embodiment of the externally heated thermal degradation reactor according to the invention in a partly side view, and partly sectional view, in which the internal design of the reactor is shown. The reactor comprises a reaction chamber 1 formed as a cylindrical rotating drum having a substantially horizontal rotational axis, wherein at the supply end of the reaction chamber, a stationary end plate 3 is coupled to the rotating reaction chamber 1 by means of seals 17. Similarly, at the discharge end of the reaction chamber, another stationary end plate 4 is coupled to the rotating reaction chamber 1 by means of seals 17.

On the supply-side end plate 3 of the reaction chamber 1, there is at least one opening 20 formed for feeding the base material to be processed and the reducing agent (preferably overheated steam) needed for the thermal degradation reaction. Although not specifically shown in the drawings, the supply-side end plate 3 may comprise a first opening for feeding the base material to be processed and a separate second opening for the reducing agent.

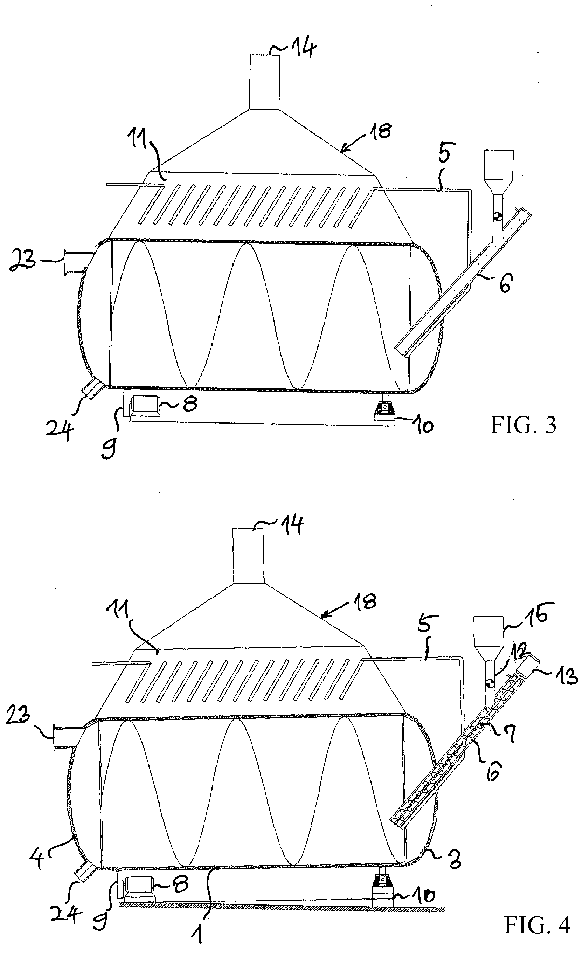

A feeding pipe 6 is led through the at least one supply opening 20. The inner end of the pipe 6 is arranged in the inner space of the reaction chamber 1. To the outer end of the feeding pipe 6 or to a part thereof adjacent to said outer end, a reservoir 15 is connected through a chute 12 for supplying the base material to be processed. Depending on the physical properties of the base material, in particular density, flowing capability, etc. of the base material, the feeding pipe 6 may be formed as a simple chute operating by gravity or as it can be seen, for example, in Figure 4, it may be formed as a screw-type feeding pipe, within which a screw 7 driven by an external motor 13 is arranged.

As shown in Figure 2, in a preferred embodiment of the reactor according to the invention, a spiral edge 2 is preferably formed on the inner wall of the reaction chamber, said spiral 2 being shaped as a rib slightly projecting from the wall of the reaction chamber 1. The aim of said spiral edge 2 is to enhance moving the solid, plastic or other fluidic material inside the reaction chamber 1 from its supply end toward its discharge end.

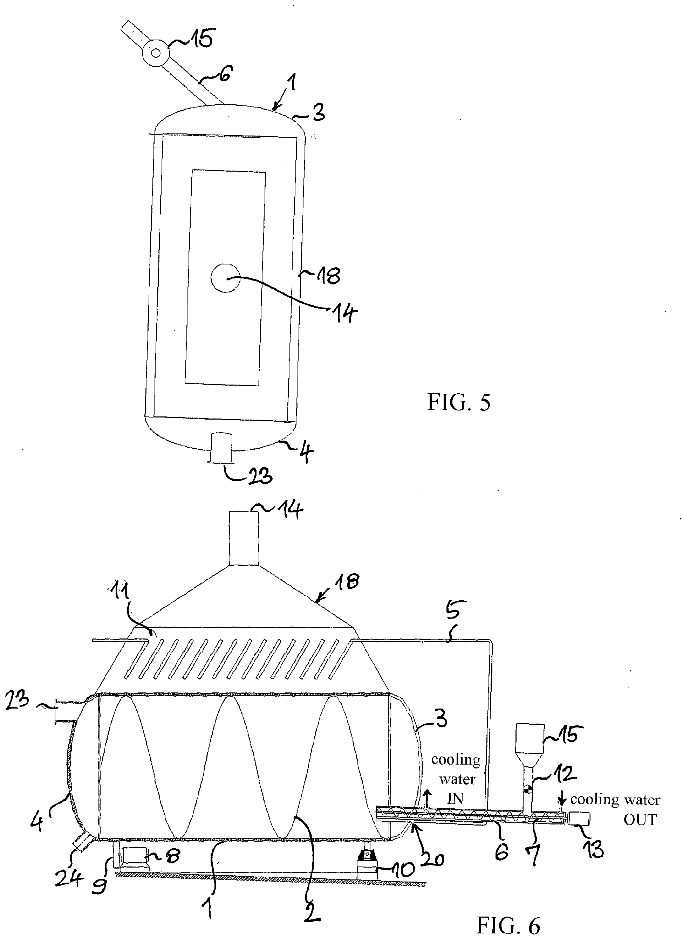

When the feeding pipe 6 is of the screw-type, it can be arranged even horizontally as shown in Figure 6.

The end of the pipe 5 of the reducing agent within the reaction chamber 1 is preferably arranged adjacent to the inner end of the feeding pipe 6, thereby the base material, which might accumulate adjacent to the feeding location, can be spread by the pressurized reducing agent when directed onto it. This may have importance particularly when the base material is not homogeneous or when the amount of the supplied base material has temporarily increased and the base material possibly accumulating in the surroundings of the feeding location may encumber the continuous feeding.

Since in the reactors of this type the thermal degradation of the base material generally takes place in a partly or entirely oxygen-free environment, at feeding the solid base material and at discharging the solid reaction products it is preferred that a sluice valve or a double gorge valve is coupled to the respective opening of the reaction chamber 1, thereby at continuous feeding and discharging it can be still achieved that no oxygen can get from the external environment into the reaction chamber 1.

As it can be seen in Figures 1 and 2, for example, the feeding pipe 6 is preferably arranged in a sloped manner, that is, it defines a specific angle, preferably about 30° to 60°, with respect to the horizontal plane. Moreover, the feeding pipe and the vertical central plain of the reaction chamber 1 may also define a specific angle, which is typically within the range of about 30° to 60°, so that the base material flowing in the feeding pipe 6 can be directed to a lateral region of the inner wall of the reaction chamber 1 at its feeding. The rotational direction of the reaction chamber 1 is preferably set so that the base material directed to its side wall starts moving upward.

Taking the relatively high operational temperature of the reaction chamber 1 into view, in order to avoid an excessive warming of the feeding pipe 6, it is preferably provided with cooling, for example water cooling. To this end, a cooling agent (e.g. cooling water) is supplied into the outer wall of the feeding pipe 6 through an inlet, and the feeding pipe also has an outlet for the cooling agent adjacent to the supply-side end plate 3. Due to cooling the temperature of the base material can be maintained at about 60°C to 80°C inside the feeding pipe 6, thereby the base material can be prevented from melting or at least becoming plastic to an extent which would adversely affect the feeding. Obviously, cooling can be applied not only for a horizontal feeding pipe 6 shown in Figure 6, but also for the sloped feeding pipe 6 as shown in Figures 1 to 4. Through the at least one supply opening 20 of the supply-side end plate 3, a pipe 5 is also inserted for supplying a reducing agent, preferably overheated steam, into the reaction chamber for the thermal degradation reaction. The reducing agent may also be other gaseous materials, for example carbon dioxide.

At an upper point of the discharge-side end plate 4 of the reaction chamber 1, a first discharge opening 23 is formed for discharging the gaseous reaction products produced in course of the reaction. To the first discharge opening 23 an appropriate pipe can be connected. At a lower point of the discharge-side end plate 4, a second discharge opening 24 is also formed for discharging the solid reaction products produced in course of the reaction. To the discharge opening 24 an appropriate discharging pipe can also be connected.

As shown in Figure 1, for example, the reaction chamber 1, which is typically in the form of a rotating drum, is rotated by means of a driving mechanism 9 driven by a motor 8. The driving mechanism 9 also serves as a support point of the reaction chamber 1. Another support point of the reaction chamber is a rotating support 10 which is provided with a roller. Preferably, the roller-type support 10 has an adjustable height, thereby the rotational axis of the reaction chamber 1 can be slightly tilted with respect to the horizontal plane so that the reaction chamber 1 inclines towards its discharge end. In the embodiment shown in Figure 3, the reaction chamber 1 extends horizontally, in parallel to the ground, whereas in the embodiments shown, for example, in Figures 1 and 2, the discharge end of the reaction chamber 1 is slightly tilted towards its discharge end, so it has an inclination with respect to the horizontal plane, which is preferably at most α=4° to 5°.

As it can be clearly seen in the side view of Figure 1, for example, the reaction chamber 1 is surrounded by a housing 18, into the wall of which at least one infra radiation heating unit 16 is integrated on both sides of the housing. The heating units 16 are arranged to substantially uniformly heat the major surface of the wall of the reaction chamber 1 from outside.

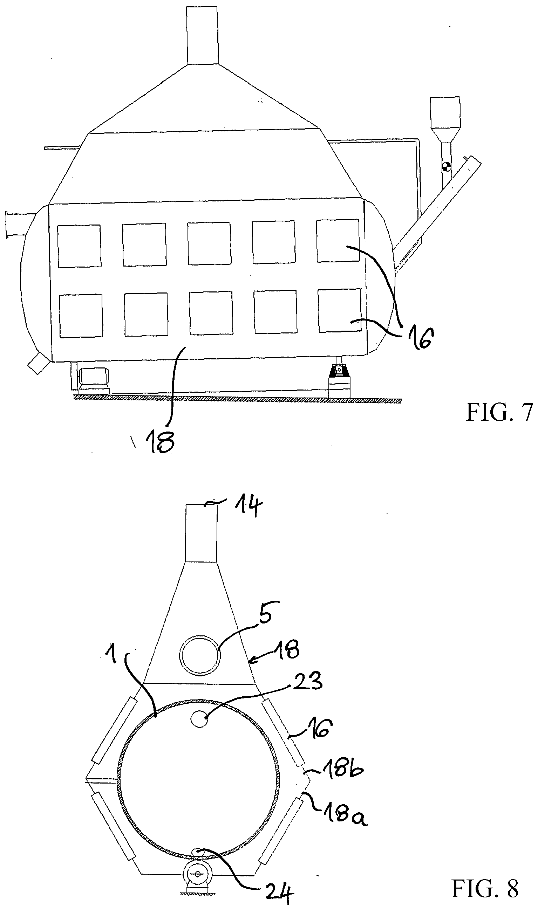

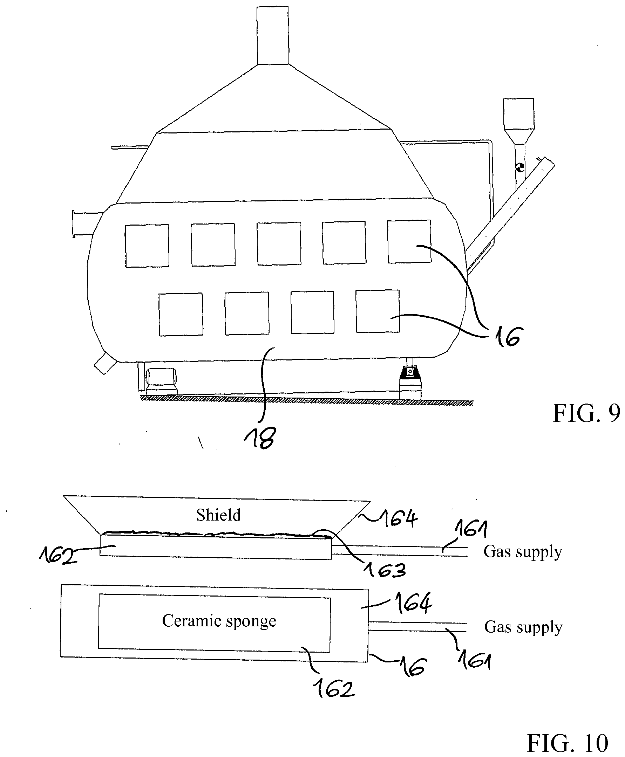

On both sides of the housing 18, a single heating unit 16 may, for example, be integrated as shown in Figure 1. In this case it is preferred that each of the heating units 16 has a plurality of sections in the direction of the rotational axis of the reaction chamber 1, the heating power of each section being individually controllable, whereby multiple sections of different temperature can be formed in the reaction chamber 1. In a preferred embodiment of the reactor, a plurality of heating units are integrated into the wall of the housing 18 in the direction of the rotational axis of the reaction chamber 1, wherein the heating power of said heating units can be controlled individually or in groups. These embodiments are illustrated in Figure 7 and 9.

It is particularly preferred that on both sides of the housing 18 a plurality of heating units 16 are mounted according to a predetermined pattern in parallel to the rotational axis of the reaction chamber 1 at different height levels, and wherein the heating power of the heating units 16 can be controlled individually or in groups. The predetermined pattern may include heating units arranged in a matrix in two or more rows and two or more columns, heating units arranged in a honeycomb pattern or a mosaic pattern, heating units arranged in shifted rows, heating units arranged in a chess table configuration, etc. In the embodiment shown in Figure 7, the heating units 16 are integrated into the side wall of the housing 18 on both sides of the housing, in two rows with one above the other. In the embodiment shown in Figure 9, the heating units 16 are also arranged in two rows, but the lower row is shifted with respect to the upper row.

The heating units 16 may, for example, be gas-fired units. In this case it is preferred that each of the heating units 16 comprises a porous ceramic plate as an infra radiating body, wherein the fuel material is burnt on the surface of the ceramic plate facing towards the reaction chamber. An exemplary embodiment of a gas-fired heating unit 16 is shown in Figure 10 in schematic side and top plan views. The fuel gas is supplied through a line 161 into a porous ceramic plate 162, a so called ceramic sponge, through which the gas flows to the surface of the ceramic plate 162 facing towards the reaction chamber and it burns there. The gas-fired infra radiation heating units 16 operate substantially in a flame-free manner as the burning fuel forms a very thin and continuous flame surface 163 on the side of the ceramic plate 162 facing inwards. Due to the burning of the fuel, the ceramic plate 162 gets warm and it gives its heat to the wall of the reaction chamber 1 via infra radiation. At the reactor according to the invention, no flame directly reaches the wall of the reaction chamber 1. The combustion gases produced during the burning process are diverted by a shield 164 of the heating units 16 towards the inside of the housing 18. At the same time, the shield 164 also serves as a directing surface for the infra radiation.

When the heating units 16 are of gas-fired type, they obtain the oxygen required for the burning from the environment of the reactor, whereas the combustion gas resulted from the burning is directed within the housing 18, but outside the reaction chamber 1, in a way that the combustion gas exits from the housing 18 through a ventilation opening 14 formed on the upper part of the housing 18. Except the ventilation hole 14, the housing 18 is coupled to the reaction chamber 1 in a substantially gas-tight manner.

The combustion gas produced during the operation of the gas-fired heating units 16 carries a substantial amount of heat energy, a portion of which is transferred to the wall of the reaction chamber 1 during its flow inside the housing 18, whereby due to the convective heat transfer thus achieved, the heating efficiency of the reactor further improves.

Alternatively, the infra radiation heating units may also be provided in the form of electric heating units. The application of this type of heating units is particularly beneficial for reaction chambers of relatively small volume. In the electrically powered heating units no combustion gas is produced, but the heat radiation warms up the air within the inner space of the housing, and the heated air is flowing upwards and exits the housing through the upper ventilation hole. To the place of the exiting air, some environmental air can flow from outside through the heating units or directly, through a plurality of ventilation channels formed around the heating units.

As shown, for example in Figure 2, the pipe 5 connected to the supply opening 20 is guided through the heat exchange section 11 formed in the housing 18 in order to further improve the overall energetic efficiency of the reactor according to the invention. The heat exchanging section 11 is formed above the reaction chamber 1, where the combustion gas of the heating units 16 is flowing towards the ventilation hole 14. A portion of the remaining heat carried by the combustion gas is transferred through the pipe 5 to the reducing agent flowing therein, thus warming up or further heating said reducing agent. As it can be seen in Figure 2, for example, the pipe is guided within the heat exchanging section 11 along a spiral path, like a serpentine pipe, for providing the largest possible heat transfer surface.

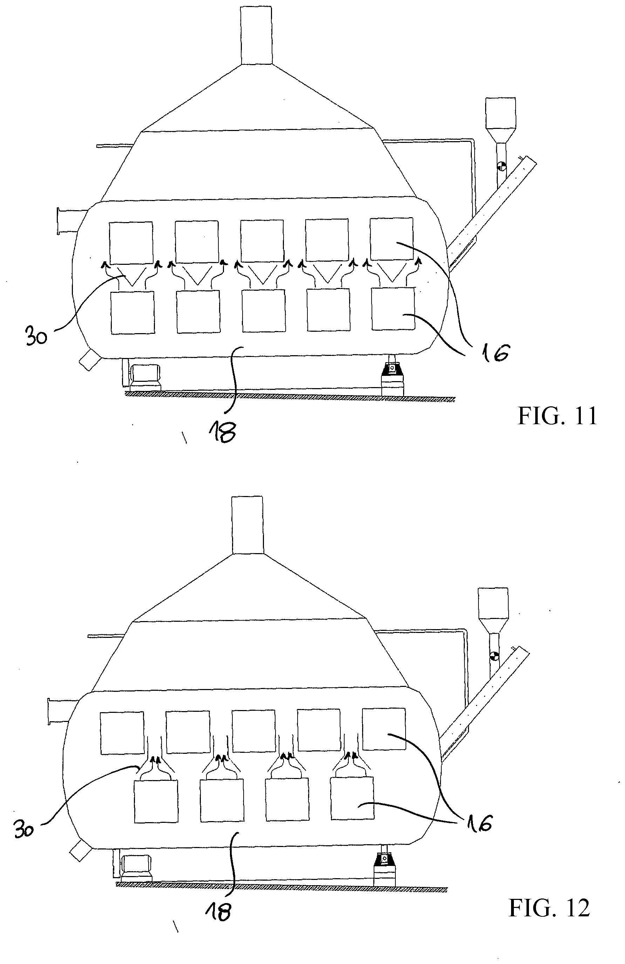

As shown, for example, in Figure 11 and 12, on the inner surface of the housing 18, between the infra radiation gas-fired heating units 16, the strips 30 for baffling the combustion gas are preferably arranged so that they can influence the flowing path of the combustion gas of the heating units 16 to some extent, mainly at the inner surface of the housing 18. The strips 30 are formed as thin plates slightly projecting from the inner wall of the housing 18 and they are arranged so that they can at least partly divert the combustion gas of the lower heating units 16 away from the infra radiating surfaces of the upper heating units 16. As a result, the combustion gas flowing upwards does not at all or hardly block the burning process taking place in the upper heating units 16, thereby the efficiency of the heating units 16 substantially improves.

Figure 11 illustrates an exemplary arrangement of the strips 30 used for baffling the combustion gas of the heating units 16 of the embodiment shown in Figure 7, whereas Figure 12 illustrates another arrangement of the strips 30 for the heating units 16 of the embodiment shown in Figure 9. In Figures 11 and 12, the small arrows schematically show the flowing direction and path of the combustion gas along the inner surface of the housing 18.

Due to the use of the strips 30, the flow distribution of the combustion gas and accordingly, the surface heat transfer profile over the cylindrical surface of the reaction chamber 1 tends to be even more uniform. Furthermore, if multiple sections of different temperature are to be provided in a direction parallel to the longitudinal axis of the reaction chamber 1 by means of heating units 16 with individually controlled heating power, the lateral spreading of the combustion gas can be significantly reduced by the use of the strips 30, and thereby the desired surface heat distribution profile over the surface of the reaction chamber can be adjusted more precisely.

The height of the strips 30 are preferably dimensioned so that at operational temperature a clearance of a predefined width is maintained between the reaction chamber 1 and the inner end of the strips 30 opposite to the wall of the reaction chamber. The width of this clearance is preferably at least 10 mm to 15 mm. This also means that as a result of the heat expansion of the reaction chamber 1, the clearance is much wider in a cold condition of the reactor, and it may reach, for example, even 25 mm to 30 mm. Since the strips 30 do not reach the surface of the reaction chamber 1 at an operational temperature of the reactor either, they do not form closed air channels, thereby a slight lateral spreading of the combustion gas can take place over the cylindrical surface of the reaction chamber 1, wherein the aerodynamic effect of the strips 30 hardly prevail, thereby the upward flow of the combustion gas becomes more uniform along the cylindrical surface of the reaction chamber, which allows an even more uniform heating of the wall of the reaction chamber 1. The combustion gas flowing around the wall of the reaction chamber 1 also functions in part as a transfer medium of the heat produced by the infra radiation heating units 16, thereby making the surface distribution of the heat transfer between the heating units 16 and the wall of the reaction chamber 1 even more uniform due to their rather uniform flow distribution.

As it can be seen, for example, in Figure 8, the housing 18 is preferably formed of a lower part 18a and upper part 18b that are secured to each other by means of a releasable joint. The lower and upper parts are formed so that upon dismounting the housing 18, the lower and upper parts 18a, 18b can be separated in a way that the reaction chamber 1 can be removed from the housing 18, for example for repair, maintenance or replacement purposes.

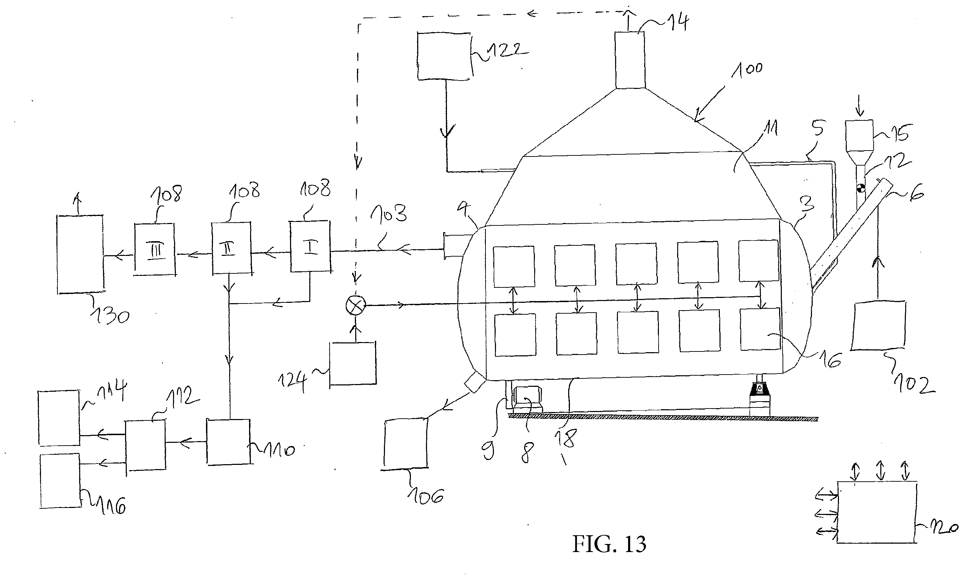

As the schematic system design of Figure 13 illustrates, a gas tank 102 may be connected to the feeding pipe 6 at its outer end or at another position adjacent thereto, wherein a pressurized inert gas is directed from said gas tank 102 into the feeding pipe 6. This inert gas enhances the flow of the typically solid and grainy base material within the feeding pipe 6.

A suction device may be coupled to the discharge opening 23 of the reactor 100 through a discharge pipe 103, and optionally by interposing additional processing units, said suction device performs an active withdrawal of the gaseous reaction products from the inner space of the reaction chamber 1. The power of this suction device is controlled so that the pressure inside the reaction chamber 1 be lower than the ambient pressure outside the reaction chamber.

A portion of the reaction gas discharged from the reaction chamber 1 is preferably returned to the heating units 16, after an appropriate cleaning, and the returned gas portion is used by the heating units as a fuel material. Due to this at least partial re-use of the reaction gases, the overall energetic efficiency of the reactor can be further improved, and this solution is also beneficial from the view of environment protection.

To the discharge opening 24 of the reactor 100 a closed soot container 106 having a heat-insulated wall is coupled through a pipe 34 for collecting the solid reaction products. Due to the heat-insulated wall, the solid reaction products exiting from the reaction chamber 1, typically soot grains, are cooling down more slowly than in an open container, and therefore no agglutination takes place in it.

The operation of the reactor according to the present invention will now be described with reference to Figure 13.

The base material to be processed through thermal degradation is fed into the container 15, from where it is directed via the chute 12 and the feeding pipe 6 into the inner space of the reaction chamber 1 through the supply-side stationary end plate 3. The base material is preferably conveyed in the form of grains or a ground material or in any other bulky form. The base material is typically plastic waste, including, in particular, polyethylene, polycarbonate, polystyrene or other polymer materials or any combination thereof, but it may also include other solid carbon-hydrogen-containing material that can be degraded by thermal degradation, such as ground rubber, ground municipal waste, wood waste, etc. In case of granules the bulk density of the granules should preferably be in the range from 600 kg/m³ to 800 kg/m³ so that the granules have the desired flowing properties.

The volume of the reaction chamber 1 is preferably approximately 4 to 12 m³, more preferably approximately 6 to 8 m³. From the point of view of the thermal degradation process it is particularly preferred that the reaction chamber is filled with the base material to at most about 10% of its volume. If the base material to be processed spends about 30 to 60 minutes in the reaction chamber 1, depending on the rotational speed thereof, the amount of granule supplied into the reaction chamber 1 is at most 0,5 to 1 m³/hour.

In order to maintain the temperature necessary for the thermal degradation process, the wall of the reaction chamber 1 is heated by means of a plurality of infra radiation heating units 16 integrated into the wall of the housing 18. The heat transfer to the reaction chamber 1 takes place primarily via the infra radiation from the heating units 16 on the one hand, and in case of using gas-fired heating units, also in a convective way, from the hot combustion gas of the heating units 16. Heating of the base material is essentially carried out through contacting heat transfer, which takes place on the inner surface of the wall of the reaction chamber 1.

In case of processing plastic materials, overheated steam is added to the reaction as a reducing agent. For other base materials, the reducing agent may, for example, be carbon dioxide. Supplying the overheated steam may be carried out through the pipe 5 and the temperature of the steam fed into the inner space of the reaction chamber 1 is typically about 450°C to 600°C, preferably 500°C to 550°C. The steam is generally produced by an external steam generator 122, for example in an amount of 20 to 50 kg/hour.

In a preferred embodiment of the reactor according to the invention, the steam to be supplied into the reaction chamber 1 is taken from a steam generator 122 and the steam is overheated in the upper part of the housing 18 in the heat exchanging section 11 arranged above the reaction chamber 1, where a portion of the heat carrying by the hot air stream flowing upwards within the housing 18 is transferred to the steam flowing in the pipe 5 guided in the heat exchanging section 11. In the heat exchanging section 11, the heat of the combustion gas produced by the heating units 16 is utilized in case of the use of gas-fired heating units, whereas the heat of the hot air stream warmed up by the infra radiation of the heating units and thereby flowing upwards is utilized in case of electrically powered heating units 16.

The reaction chamber 1 is preferably made of stainless steel and it is rotated by the motor 8 and the drive assembly 9, preferably at a rotational speed of 1 to 2 rpm.

The operational temperature inside the reaction chamber 1 is maintained preferably at about 350°C to 600°C, more preferably at 450°C to 500°C, and therefore when heated, the supplied base material, which is typically in the form of granules of plastic waste, first changes to a plastic state, then to a fluid state, and at the output section of the reactor, as a result of the thermal degradation, it changes to a gas, while the solid reaction products, such as hydrocarbon residuals get out therefrom. The gaseous reaction products resulted from the reaction and the reducing agent (e.g. overheated steam) supplied into the reaction chamber 1 together form a gaseous mix inside the reaction chamber 1, said gaseous mix being directed from the reaction chamber 1 into a condensation unit. The solid reaction products resulted from the reaction, for example hydrocarbon residuals, move from the supply end towards the discharge end due to the rotation of the reaction chamber 1, and also due to the incline of the reaction chamber, and they get into a collecting container 106, preferably into a closed container having a heat-insulated wall, through the discharge opening 24 formed on the discharge-side end plate 4. Forwarding the solid materials inside the reaction chamber 1 is preferably facilitated by a spiral thread formed on the inner wall of the reaction chamber 1.

With respect to the very high temperature of the reaction chamber 1, it is supported by means of sliding-supporting rollers which allow a displacement of the reaction chamber 1 relative to the support itself in case of a linear heat expansion of the reaction chamber 1.

The temperature within the reaction chamber 1 is adjusted to a desired value through controlling the heating power of the heating units 16. When the heating units 16 operate in a switching mode, the temperature is controlled by their periodical switching on and off, or when the temperature of the heating units 16 can be controlled in a continuous manner, the temperature can be adjusted by increasing or decreasing the current heat power of the heating units 16. Optionally, the temperature of the inner space of the reaction chamber 1 may be controlled by changing the amount and/or the temperature of the reducing agent (e.g. overheated steam) fed into the reaction chamber 1.

If the base material to be processed inflames accidentally, and therefore the temperature within the reaction chamber 1 increases above a critical value, feeding the overheated steam might not be enough for quenching the fire. In such an emergency case it is preferred to direct a fire-retardant gas, for example nitrogen, into the reaction chamber 1 through the feeding pipe 6, for example, from a gas tank 102 storing an inert gas.

In case of outage the reaction gases are directed from the suddenly stopping reactor through an emergency smoke channel into the ambient air via a mechanic valve, which automatically opens in case of an outage. In such a case the exiting reaction gases are directed to a permanently burning security flare, which burns the gases, and therefore they do not get into the ambient air. The security flare may be operated using natural gas or bottled gas. The parts of this safety solution are not specifically illustrated in the drawings as their design and the way how they are connected to the reactor are well known for those skilled in the art.

The reaction chamber 1 is heated by means of the afore-mentioned infra radiation heating units 16. Preferably, the heating units 16 are operated in an automatic mode, and the desired reaction temperature can be controlled within a wide range of temperature depending on the operational parameters by means of sensors and computer control. As a fuel for the gas-fired heating units 16 natural gas is preferably used, which is supplied from an external gas source 124. It is also possible that after the reactor has reached its operating condition, some of the heating units 16 are switched off from the external gas source 124 and the still operating heating unites 16 will be fed with the gaseous reaction products produced by the reactor. Preferably, each of the heating units 16 is provided with a dedicated safety automatism which is monitoring the operation of the heating unit and even maintains the burning process when the feedback of the reaction gases temporarily stops for any reason. The automatic mechanism switches off the gas supply of the heating units 16 in an emergency situation.

The gas-fired heating units 16 may also be provided with an air heating circle, not shown in the drawings, for warming up the supply air while it is flowing therethrough. The heated supply air is then mixed to the fuel gas in the heating units 16.

To the reactor according to the invention, a condensation unit may be connected for separating the heavy-weight hydrocarbon fractions and the contaminated water from the gaseous reaction product which is discharged through the discharging opening 23 from the reaction chamber 1 by means of an air suction device 130. The uncondensed, gaseous, light-weight hydrocarbon fractions may be used, for example, in a heat power engine for driving a current generator.

The condensation unit preferably consist of three liquefying condensers 108. In a first condensation stage the temperature is for example 240°C, in the second stage the temperature is for example 120°C, and in the third stage the temperature is for example 80°C. The respective temperature is provided in each condenser through a fluid heat carrier circulating in each condenser, wherein the heat carrier is warmed up to the predefined temperature by means of a heat generator.

The fluid hydrocarbon produced by the first and second stages of the condensation unit is preferably collected in a separated container 110, from which the liquid is directed into a centrifugal separator 112, wherein the heavy-weight hydrocarbon fractions and the contaminated water are separated from each other. The separated heavy-weight hydrocarbon fractions are subsequently directed to a collecting reservoir 114, whereas the contaminated water is directed into another reservoir 116. The contaminated water is preferably subject to chemical cleaning, and the dissolved hydrocarbons are separated therefrom.

For controlling, managing and monitoring the thermal degradation process within the reaction chamber 1, an electronic or computer-controlled management system 120 is used. This system preferably includes the following components:
- controller of the feeding unit for checking the level of the storing and feeding containers, controlling the operation of the feeding pipe, including controlling the rotational speed of the screw and the cooling of the feeding pipe;
- controller of the heating units for continuously monitoring the temperature of the gas burners and controlling the fuel-air mixture supplied to the gas burners, igniting the gas burners and automatically switching them off in case of emergency;
- controller of the reaction chamber primarily for controlling the pressure and the temperature inside the chamber. Furthermore, this controller controls operation of the air suction device used for removing the gaseous reaction products from the reaction chamber, and to supply an inert fire-retardant gas, for example nitrogen, into the reaction chamber at an appropriate pressure in case of emergency;
- controller of the steam generator/overheating unit for controlling the temperature of the unheated and the overheated steam and for controlling the amount of overheated steam supplied into the reaction chamber depending on the temperature and the technological operation mode of the reaction chamber;
- controller of the condensation unit for controlling the temperature of the heat transfer medium in the condenser's heating system, and for controlling the temperature of the gaseous reaction products at the output of the condensation unit, and additionally for controlling the operation of the circulating pumps belonging to the condensers. This controller is also responsible for the operation of the centrifugal separator and for controlling and maintaining the liquid level inside the condensers and in the various containers of the condensation unit;
- controller of the electric power generator for controlling the amount of gases supplied to the generator and the heating units.

It is obvious for those skilled in the art that a number of other technological units, for example gas cleaning cyclone, gas scrubber and various types of filters and cleaning devices, containers, etc. may be connected to the thermal degradation reactor described above. The function of these units and the way of integration thereof into the reactor according to the present invention is well known for a skilled person and therefore the detailed description of these unit is omitted.

## Claims

1. An externally heated thermal degradation reactor comprising:
- a reaction chamber in the form of a cylindrical rotating drum having a substantially horizontal rotational axis;
- an end plate on a supply side and a discharge side of the reaction chamber, respectively, said end plates being sealingly coupled to the rotating reaction chamber, wherein the supply-side end plate comprises at least one opening for feeding a base material and a gaseous reducing agent, and wherein the discharge-side end plate comprises a first discharge opening for discharging gaseous reaction products and a second discharge opening for discharging solid reaction products;
- a feeding pipe extending through the supply-side end plate into the reaction chamber;
- a pipe extending through the supply-side end plate into the reaction chamber for feeding a reducing agent; and
- a housing arranged around the reaction chamber, said housing being sealingly attached to the reactor chamber and provided with a vent hole on its upper part;
**characterized in that**
the reactor further comprises a plurality of infra radiation heating units arranged around at least a part of the cylindrical surface of the reaction chamber and heating said surface substantially in a uniform manner, said heating units being integrated into the wall of the housing on two sides thereof.

2. The reactor of claim 1, **characterized in that** on both sides of the housing, a single heating unit is integrated into the wall of the housing, each heating unit comprising a plurality of sections along the rotational axis of the reaction chamber, and wherein the heating power of each heating section can be individually controlled.

3. The reactor of claim 1, **characterized in that** on both sides of the housing a plurality of heating units are integrated into the wall of the housing along the rotational axis of the reaction chamber, wherein the heating power of each heating unit can be controlled individually or in groups.

4. The reactor of any one of claims 1 to 3, **characterized in that** the heating units are gas-fired, wherein the gas-fired heating units comprise a porous ceramic plate as an infra radiating body and burn the fuel material in a substantially flame-free way on the surface of the ceramic plate facing towards the reaction chamber.

5. The reactor of claim 3 or 4, **characterized in that** a plurality of gas-fired infra radiating heating units are mounted in the wall of the housing according to a predetermined pattern at at least two height levels, said heating units having individually or group-wise controllable heating power, and wherein on the inner surface of the housing, between the heating units, gas baffling strips are arranged to at least partly divert the combustion gas of the lower heating units away from the infra radiating surfaces of the higher heating units.

6. The reactor of claim 5, **characterized in that** the height of the gas baffling strips are dimensioned so that under normal operational conditions, there is a clearance of at least 10 mm, preferably at least 15 mm between the wall of the reaction chamber and an opposite edge of the gas baffling strips.

7. The reactor of any one of claims 1 to 3, **characterized in that** the heating units are electrically powered.

8. The reactor of any one of claims 1 to 7, **characterized in that** the pipe carrying the reducing agent extends through a heat exchange section of the housing formed within a part of the housing above the reaction chamber.

9. The reactor of any one of claims 1 to 8, **characterized in that** the inner wall of the reaction chamber comprises a spiral rib projecting therefrom.

10. The reactor of any one of claims 1 to 9, **characterized in that** a gas tank is connected to the feeding pipe for supplying a pressurized inert gas into the feeding pipe.

11. The reactor of any one of claims 1 to 10, **characterized in that** the feeding pipe and the rotational axis of the reaction chamber defines an angle of approximately 30° to 60° in a horizontal projection plane, and the inner end of the feeding pipe within the reaction chamber is arranged adjacent to the inner wall of the reaction chamber.

12. The reactor of any one of claims 1 to 11, **characterized in that** the housing is formed of a lower part and an upper part that are secured to each other by means of a releasable joint in a way that upon their detachment the reaction chamber can be removed from the housing.

13. The reactor of any one of claims 1 to 12, **characterized in that** on the supply-side end plate, a single supply opening is formed for both of the feeding pipe and the pipe of the reducing agent; or a first supply opening is formed on the supply-side end plate for the feeding pipe and a second opening is formed for the pipe of the reducing agent.

14. The reactor of any one of claims 1 to 13, **characterized in that** the inner end of the pipe of the reducing agent within the reaction chamber is arranged adjacent to the inner end of the feeding pipe.

15. A method for processing a base material with thermal degradation by means of the reactor according to any one of claims 1 to 14,
**characterized in that** the method comprises
- continuously feeding the base material and the reducing agent into the reaction chamber, and
- at least the feeding rate of the base material, the rotational speed of the reaction chamber and the heating power of the heating units are controlled so that the base material stays about 30 to 60 minutes in the reaction chamber at a continuous operation, and the operational temperature inside the reaction chamber is about 400°C to 600°C, preferably about 450°C to 500°C.
